# EUROPEAN PATENT APPLICATION

(11) **EP 2 703 689 A1**
(43) Date of publication of application: **05.03.2014**
(21) Application number: 12182911.3
(22) Date of filing: 04.09.2012
(51) Int. Cl.: F16F 15/32

(54) **An apparatus comprising a shaft and a balancing device for balancing the shaft**

(71) Applicant: Siemens Aktiengesellschaft, 80333 München (DE)
(72) Inventor: Knowles, Grahame, Lincoln, Lincolnshire LN6 3LN (GB)
(74) Representative: McGowan, Nigel George

(57) **Abstract**

An apparatus comprising a shaft (5) and a balancing device for balancing the shaft (5), wherein the shaft (5) is mounted for rotation and the balancing device is mounted on the shaft (5) to rotate with the shaft (5), wherein the balancing device comprises first and second leaf springs (1) and a balancing weight, wherein the leaf springs (1) extend axially along the shaft (5) and are disposed on opposite sides of the shaft (5) in diametrically opposed relation, wherein each leaf spring (1) has one end secured to the shaft (5) and its remaining length unencumbered to flex upon rotation of the shaft (5), wherein the balancing weight is mounted on a remaining length of a leaf spring (1), characterised in that the balancing device further comprises a coupling mechanism (11, 23, 31) which couples together the remaining lengths of the leaf springs (1) so that the remaining lengths flex in unison.

## Description

This invention relates to an apparatus comprising a shaft and a balancing device for balancing the shaft.

More particularly the invention relates to an apparatus comprising a shaft and a balancing device for balancing the shaft, wherein the shaft is mounted for rotation and the balancing device is mounted on the shaft to rotate with the shaft, wherein the balancing device comprises first and second leaf springs and a balancing weight, wherein the leaf springs extend axially along the shaft and are disposed on opposite sides of the shaft in diametrically opposed relation, wherein each leaf spring has one end secured to the shaft and its remaining length unencumbered to flex upon rotation of the shaft, wherein the balancing weight is mounted on a remaining length of a leaf spring.

European patent application no. 11180611 discloses examples of such an apparatus. In these examples, the diametrically opposed axial leaf springs act independently, i.e. each leaf spring tends to fly radially outwards away from the axis of rotation, due to the centrifugal forces acting separately on each leaf spring. When a trim balance weight is then added to the end of one of the leaf springs, the associated additional centrifugal force is then resisted solely by the bending stiffness of that one leaf spring. Whilst this is quite satisfactory for many, low stiffness, high speed shafts, for other shafts, depending on the detail of the design requirements, this is not so.

According to the present invention there is provided an apparatus comprising a shaft and a balancing device for balancing the shaft, wherein the shaft is mounted for rotation and the balancing device is mounted on the shaft to rotate with the shaft, wherein the balancing device comprises first and second leaf springs and a balancing weight, wherein the leaf springs extend axially along the shaft and are disposed on opposite sides of the shaft in diametrically opposed relation, wherein each leaf spring has one end secured to the shaft and its remaining length unencumbered to flex upon rotation of the shaft, wherein the balancing weight is mounted on a remaining length of a leaf spring, **characterised in that** the balancing device further comprises a coupling mechanism which couples together the remaining lengths of the leaf springs so that the remaining lengths flex in unison.

In an apparatus according to the preceding paragraph, it is preferable that the coupling mechanism is ring-like in form, encircles the shaft, and engages the remaining lengths of the first and second leaf springs, and that the balancing weight is mounted on the coupling mechanism.

In an apparatus according to the preceding paragraph, it is preferable that the coupling mechanism engages the remaining length of each leaf spring via a slideway attachment enabling the axial position of the coupling mechanism along the leaf springs to be varied.

In an apparatus according to the preceding paragraph, it is preferable that the cooperating halves of each slideway attachment include cooperating halves of an axially extending tapped hole for receipt of a threaded locking plug for fixing the axial position of the coupling mechanism along the leaf springs.

In an apparatus according to the preceding paragraph but one, it is preferable that the ring-like coupling mechanism comprises mating half rings which mate at mating interfaces disposed within axially extending grooves in the leaf springs, each interface incorporating an axially extending tapered pin for biasing the mating half rings against the sides of a groove to fix the axial position of the coupling mechanism along the leaf springs.

In an apparatus according to the preceding paragraph, it is preferable that each axially extending groove includes in its sides axially spaced detent notches, and the mating half rings include detent pins for engagement with detent notches upon application of the tapered pins.

In an apparatus according to the preceding paragraph but five, it is preferable that the coupling mechanism comprises a coupling fastener which extends diametrically through the shaft and engages the remaining lengths of the first and second leaf springs, and that a remaining length of a leaf spring supports a mounting block for mounting a balancing weight on the remaining length.

In an apparatus according to the preceding paragraph, it is preferable that each of the remaining lengths of the leaf springs supports a mounting block for mounting a balancing weight on the remaining length.

In an apparatus according to either of the preceding two paragraphs, it is preferable that the or each remaining length supports a mounting block via a slideway attachment enabling the axial position of the mounting block along the leaf spring to be varied.

In an apparatus according to the preceding paragraph, it is preferable that the cooperating halves of the or each slideway attachment include cooperating halves of an axially extending tapped hole for receipt of a threaded locking plug for fixing the axial position of the mounting block along the leaf spring.

The invention will now be described, by way of example, with reference to the accompanying drawings, in which:
Fig 1(a) illustrates a first apparatus in accordance with the present invention;
Fig 1(b) is a cross section on the line A-A in Fig 1(a);
Fig 2 illustrates a second apparatus in accordance with the present invention;
Fig 3(a) illustrates a third apparatus in accordance with the present invention;
Fig 3(b) is a cross section on the line A-A in Fig 3(a), with a spacer tube of the third apparatus omitted; and
Fig 3(c) is a plan view of an axial leaf spring of the third apparatus.

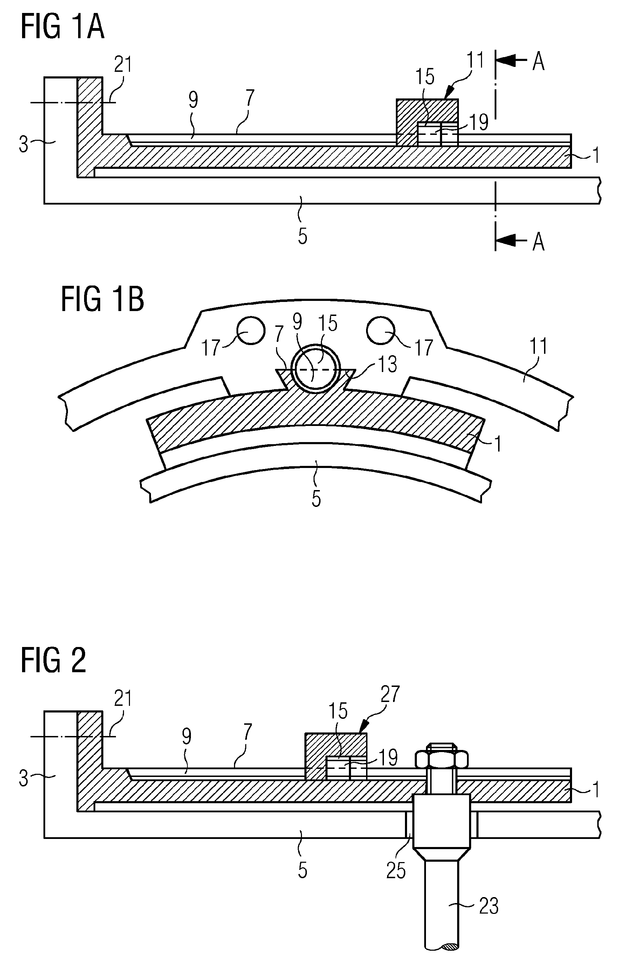

Referring to Figs 1(a) and 1(b), the first apparatus comprises a pair of diametrically opposed, axially extending leaf springs 1, securely fastened to an end flange 3 of a spacer tube shaft 5. Only the top one of the pair of leaf springs is shown. Further, only the top of the spacer tube shaft is shown. The end flange of the shaft could be an intermediate ring of the shaft. Each leaf spring 1 has an external slideway 7 of dovetail design, or similar cross section, formed into its radially outer side. Each leaf spring also contains a full length, axially extending tapped hole, with the radially outer half removed, leaving the radially inner half 9 imbedded in the radially outer side of the external slideway 7. A compensator balancing ring 11, containing a pair of diametrically opposed, close fitting dovetail grooves 13, is slideably assembled onto the leaf springs 1, so as to couple the leaf springs together. The balancing ring contains the radially outer halves 15 of a pair of blind tapped holes, to match the radially inner tapped hole halves 9 in the leaf springs 1. The balancing ring 11 also contains tapped holes 17 for the addition of trim balance weights.

Moment adjustment can be effected by axial positioning of the balancing ring 11 as required. The ring is then fixed in position by insertion of two threaded locking plugs 19, one for each leaf spring 1, into the tapped holes formed by the mating of the radially inner/outer tapped hole halves 9, 15 (this mating taking place at the interfaces between the external slideways 7 and the grooves 13). The locking plugs 19 are torque tightened into the blind radially outer halves 15 thereby firmly locking the balancing ring 11 and leaf springs 1 together.

The first apparatus of Figs 1(a) and 1(b) has a low profile to reduce windage. This requires the balancing ring 11 to be horizontally split to allow assembly over the outer diameter of the end flange 3 of the spacer tube shaft 5. The split joint can take many forms employing radial or tangential clamp bolts, pins or locking devices. Alternatively, the balancing ring can be of one piece, solid construction, provided it is large enough to pass over the end flange 3. Although the cross sections of the leaf springs comprise circular arcs, this need not be the case, and the leaf springs and compensator ring can be non-circular to suit manufacture and/or design requirements. To facilitate the precise axial positioning of the compensator ring along the leaf springs, graduation marks can be scribed at intervals along the length of the external slideways 7.

The compensator ring 11 couples the leaf springs 1 together so that they act in unison. Angular positioning is carried out by rotating the assembly concentrically around the spacer tube shaft 5 to appropriate bolt fastener mounting holes 21. It is to be appreciated that the arrangement could be positioned part way along the spacer tube shaft by utilising appropriate clamping or mounting bolts to secure the arrangement to the shaft.

In cases where the phase position (i.e. angular position around the shaft) of the shaft imbalance is already known, coupling of the leaf springs can be achieved more straightforwardly by simply bolting together the leaf springs. This occurs in the second apparatus of Fig 2.

In the second apparatus, a coupling bolt 23 extends diametrically directly through the centre of the spacer tube shaft 5, through clearance holes 25 appropriately positioned in the shaft. A balance weight mounting block 27 then comprises just a short section of the balancing ring 11 of the first apparatus of Figs 1(a) and 1(b), complete with mating tapped hole halves 9, 15 and tapped trim balance weight holes 17. Depending on the amount of trim balancing needed, it might be necessary to employ a balance weight mounting block 27 for each leaf spring 1. In this case, the masses of the blocks 27, being diametrically opposite, cancel out, and balance correction results solely from the mass of the appropriately positioned trim balance weight.

Moment adjustment is achieved in the same way as for the first apparatus, with the mounting blocks 27 taking the place of the balancing ring 11. However, the mounting blocks can also be set to different axial positions, along their respective leaf springs, to obtain a finer degree of moment adjustment.

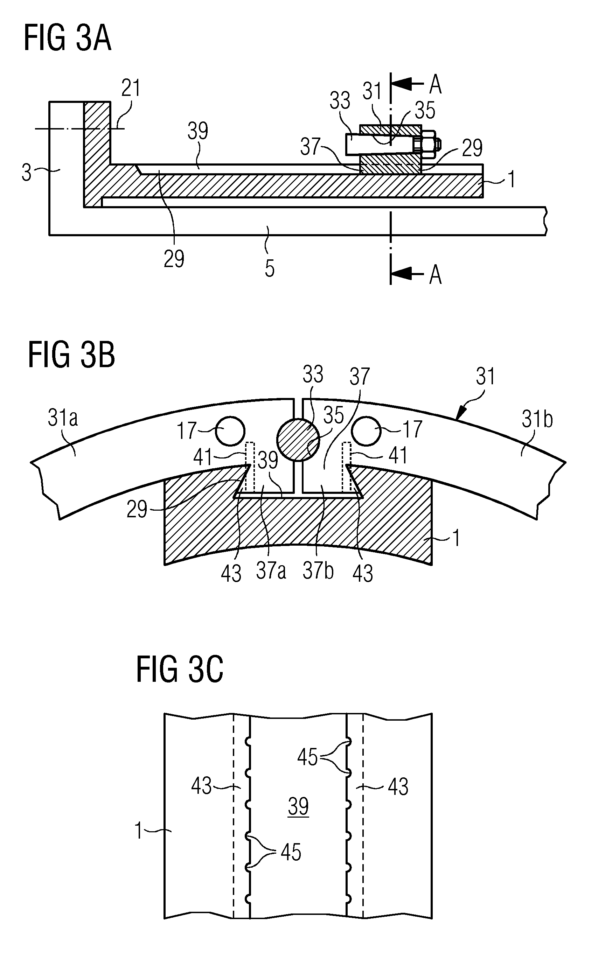

The third apparatus of Figs 3(a) to 3(c) employs the same major components as the first apparatus of Figs 1(a) and 1(b), but the dovetail slideway attachments 29 are inverted and the balancing ring 31 is vertically split. A securely fastened assembly is achieved by the use of axially fitted, tapered cotter pins 33, at each leaf spring joint. The cotter pins 33 tighten into respective tapered holes 35 formed into the mating ends of the two halves 31a, 31b of the balancing ring 31. As can be seen from Fig 3(b), as each cotter pin is tightened, the two halves 37a, 37b of a male dovetail protrusion 37 are forced against the sides of a dovetail groove 39 in a leaf spring 1. This provides a very rigid joint assembly.

If required, further axial locking can be provided by the addition of a pair of detent pins 41 per leaf spring joint. As can be seen from Fig 3(b), the pins 41 of each joint are inserted into radially extending holes in the balancing ring 31, and positioned so as to protrude partially into the tooth spaces 43 of the dovetail groove 39 of the joint. As can be seen from Fig 3(c), each dovetail groove 39 includes in its sides axially spaced pairs of opposed detent notches 45. The tightening of each cotter pin 33 causes its associated pair of detent pins 41 to move tangentially outwards to engage a selected pair of opposed detent notches 45. This prevents axial movement of the balancing ring 31 with respect to the leaf springs 1.

In the third apparatus, the dovetail slideway attachments 29 provide both (i) precise axial positioning of the balancing ring along the leaf springs for moment adjustment, and (ii) rigid assembly of the two balancing ring halves by solid mechanical joints. This provides a very efficient, low profile balancing system.

In the present invention, the leaf springs are coupled together so that the centrifugal force is then resisted by a greater stiffness corresponding to the combined stiffness of both the leaf springs. In addition, in such a coupled arrangement, the centre-of-gravity of the balancing system is much closer to the shaft centre line, so that additional leaf spring deflection resulting from increase in trim balance weight centrifugal force at high speed, now forms a much larger proportion of the centre-of-gravity radius, thereby increasing the compensating effect of the balancing system.

## Claims

1. An apparatus comprising a shaft (5) and a balancing device for balancing the shaft (5), wherein the shaft (5) is mounted for rotation and the balancing device is mounted on the shaft (5) to rotate with the shaft (5), wherein the balancing device comprises first and second leaf springs (1) and a balancing weight, wherein the leaf springs (1) extend axially along the shaft (5) and are disposed on opposite sides of the shaft (5) in diametrically opposed relation, wherein each leaf spring (1) has one end secured to the shaft (5) and its remaining length unencumbered to flex upon rotation of the shaft (5), wherein the balancing weight is mounted on a remaining length of a leaf spring (1), **characterised in that** the balancing device further comprises a coupling mechanism (11, 23, 31) which couples together the remaining lengths of the leaf springs (1) so that the remaining lengths flex in unison.

2. An apparatus according to claim 1 wherein the coupling mechanism (11, 31) is ring-like in form, encircles the shaft (5), and engages the remaining lengths of the first and second leaf springs (1), and wherein the balancing weight is mounted on the coupling mechanism (11, 31).

3. An apparatus according to claim 2 wherein the coupling mechanism (11, 31) engages the remaining length of each leaf spring (1) via a slideway attachment (7, 13, 29) enabling the axial position of the coupling mechanism (11, 31) along the leaf springs (1) to be varied.

4. An apparatus according to claim 3 wherein the cooperating halves (7, 13) of each slideway attachment (7, 13) include cooperating halves (9, 15) of an axially extending tapped hole for receipt of a threaded locking plug (19) for fixing the axial position of the coupling mechanism (11) along the leaf springs (1).

5. An apparatus according to claim 3 wherein the ring-like coupling mechanism (31) comprises mating half rings (31a, 31b) which mate at mating interfaces disposed within axially extending grooves (39) in the leaf springs (1), each interface incorporating an axially extending tapered pin (33) for biasing the mating half rings (31a, 31b) against the sides of a groove (39) to fix the axial position of the coupling mechanism (31) along the leaf springs (1).

6. An apparatus according to claim 5 wherein each axially extending groove (39) includes in its sides axially spaced detent notches (45), and the mating half rings (31a, 31b) include detent pins (41) for engagement with detent notches (45) upon application of the tapered pins (33).

7. An apparatus according to claim 1 wherein the coupling mechanism (23) comprises a coupling fastener (23) which extends diametrically through the shaft (5) and engages the remaining lengths of the first and second leaf springs (1), and wherein a remaining length of a leaf spring (1) supports a mounting block (27) for mounting a balancing weight on the remaining length.

8. An apparatus according to claim 7 wherein each of the remaining lengths of the leaf springs (1) supports a mounting block (27) for mounting a balancing weight on the remaining length.

9. An apparatus according to claim 7 or claim 8 wherein the or each remaining length supports a mounting block (27) via a slideway attachment (7, 13) enabling the axial position of the mounting block (27) along the leaf spring (1) to be varied.

10. An apparatus according to claim 9 wherein the cooperating halves (7, 13) of the or each slideway attachment (7, 13) include cooperating halves (9, 15) of an axially extending tapped hole for receipt of a threaded locking plug (19) for fixing the axial position of the mounting block (27) along the leaf spring (1).
